(19) Europäisches Patentamt
European Patent Office
Office européen des brevets

(11) **EP 4 550 929 A2**

(12) **EUROPEAN PATENT APPLICATION**

(43) Date of publication:
**07.05.2025 Bulletin 2025/19**

(21) Application number: **24221522.6**

(22) Date of filing: **27.07.2021**

(51) International Patent Classification (IPC):
*H04W 76/36* (2018.01)

(52) Cooperative Patent Classification (CPC):
**H04W 76/15; H04W 76/36**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2020 EP 20189403**

(62) Document number(s) of the earlier application(s) in accordance with Art. 76 EPC:
**21749835.1 / 4 193 789**

(71) Applicants:
• **Sony Group Corporation**
  **Tokyo 108-0075 (JP)**
• **Sony Europe B.V.**
  **Weybridge, Surrey KT13 0XW (GB)**

(72) Inventors:
• **Handte, Thomas**
  **70327 Stuttgart (DE)**
• **Ciochina-Kar, Dana**
  **70327 Stuttgart (DE)**
• **Dilly, Altfried**
  **70327 Stuttgart (DE)**
• **Verenzuela, Daniel**
  **70327 Stuttgart (DE)**

(74) Representative: **Witte, Weller & Partner**
**Patentanwälte mbB**
**Postfach 10 54 62**
**70047 Stuttgart (DE)**

(54) **COMMUNICATION DEVICES AND METHODS**

(57) A first communication device configured to communicate with a second communication device via two links comprises circuitry configured to switch between a full operation mode and a partial operation mode and control the moment of switching between the full operation mode and the partial operation mode and/or the moment of accessing the second link in the full operation mode under consideration of a switching delay indicating a delay between the initiation of switching between the full operation mode and the partial operation mode and the completion of the switching. In the full operation mode a first link of the two links is disabled and a second link of the two links commonly uses RF chains of both links for the communication with the second communication device and in the partial operation mode each link uses its RF chain for the communication with the second communication device.

Fig. 8

EP 4 550 929 A2

Processed by Luminess, 75001 PARIS (FR)

**Description**

BACKGROUND

FIELD OF THE DISCLOSURE

The present disclosure relates to communication device and methods, in particular for WLAN communication in a multilink (ML) environment.

DESCRIPTION OF RELATED ART

Multilink is very appealing to achieve high throughput and/or low latency. The idea is to combine two or more links between two stations (STAs) for data transmission. A first link may be implemented on a first channel, within e.g. a 5 GHz band, whereas the second link may be implemented on a second channel, within e.g. a 6 GHz band. A device that supports multiple links may also be called multilink device (MLD), which may be an access point (AP) MLD or non-AP (or STA) MLD. Each link between an AP MLD (also called second communication device herein) and a non-AP MLD (also called first communication device herein) is established between an AP STA and a non-AP STA. Thus, an AP MLD may comprise one or more AP STAs and a non-AP MLD may comprise one or more non-AP STAs.

A drawback of the multilink concept is that multiple radios or RF chains are needed which makes the devices expensive. This is particularly a problem for non-AP MLDs which generally have more constraints regarding implementation costs than AP MLDs.

In an enhanced single radio concept one radio is used that can be split. The single radio can have two operation modes, a full operation mode and a partial operation mode. At a receiving device, e.g. a non-AP MLD, in the full operation mode a first link of the two links between two communication devices is disabled and a second link of the two links commonly uses RF chains of both links for the communication between the communication devices. In the partial operation mode, both links use the respectively assigned spatial stream and bandwidth for the communication between the communication devices. However, when switching between the operation modes a switching delay appears.

The "background" description provided herein is for the purpose of generally presenting the context of the disclosure. Work of the presently named inventor(s), to the extent it is described in this background section, as well as aspects of the description which may not otherwise qualify as prior art at the time of filing, are neither expressly nor impliedly admitted as prior art against the present disclosure.

SUMMARY

It is an object to provide communication devices and methods that deal with the switching delay, in particular to efficiently use the period of the switching delay. It is a further object to provide a corresponding computer program for implementing the communication methods and a non-transitory computer-readable recording medium for implementing the communication methods.

According to an aspect there is provided a first communication device configured to communicate with a second communication device via two links, the first communication device comprising circuitry configured to

- switch between a full operation mode and a partial operation mode,

    wherein in the full operation mode a first link of the two links is disabled and a second link of the two links commonly uses RF chains of both links for the communication with the second communication device and
    wherein in the partial operation mode each link uses its RF chain for the communication with the second communication device; and

- control the moment of switching between the full operation mode and the partial operation mode and/or the moment of accessing the second link in the full operation mode under consideration of a switching delay indicating a delay between the initiation of switching between the full operation mode and the partial operation mode and the completion of the switching.

According to a further aspect there is provided a second communication device configured to communicate with a first communication device via two links, the second communication device comprising circuitry configured to

- switch between a full operation mode and a partial operation mode,

wherein in the full operation mode a first link of the two links is disabled or used for a third communication device and a second link of the two links uses at least the same number of RF chains as used in partial operation mode for the communication with the first communication device and

wherein in the partial operation mode the first link is disabled or used for a third communication device and the second link uses one or more RF chains for the communication with the first communication device; and

- control the transmission of data and/or control information to the first communication device under consideration of a switching delay of the first communication device, the switching delay indicating a delay between the initiation of switching between the full operation mode and the partial operation mode and the completion of the switching.

According to still further aspects corresponding communication methods, a computer program comprising program means for causing a computer to carry out the steps of the methods disclosed herein, when said computer program is carried out on a computer, as well as a non-transitory computer-readable recording medium that stores therein a computer program product, which, when executed by a processor, causes the methods disclosed herein to be performed are provided.

Embodiments are defined in the dependent claims. It shall be understood that the disclosed methods, the disclosed computer program and the disclosed computer-readable recording medium have similar and/or identical further embodiments as the claimed communication device and as defined in the dependent claims and/or disclosed herein.

One of the aspects of the disclosure is to provide channel access principles and rules that reflect a non-zero transition time between two different operation modes. The proposed rules are applicable for unlicensed band, consider medium access protection to avoid overlapping transmissions, and are compliant with general channel access rules of Wireless LAN. In embodiments implicit and explicit signaling methods are provided.

In the full operation mode, in the first communication device, a first link of the two links is disabled (i.e. switched off) and a second link of the two links commonly uses RF chains of both links, in particular commonly uses the bandwidths and/or spatial streams of both links, for the communication with the second communication device. In the partial operation mode each link uses its RF chain, in particular a respective subset of the spatial streams and/or bandwidths of both links, for the communication with the second communication device.

In the full operation mode, in the second communication device, a first link of the two links is disabled (i.e. switched off) or used for a third communication device (i.e. to communication with a third communication device), and a second link of the two links uses at least the same number (e.g. twice the number) of RF chains as used in partial operation mode, in particular uses at least the same bandwidths (e.g. twice the bandwidths) and/or at least the same number of spatial streams (e.g. twice the number of spatial streams) as used in partial operation mode, for the communication with the second communication device. In the partial operation mode, the first link is disabled or used for a third communication device and the second link uses one or more RF chains for the communication with the first communication device, in particular a respective subset of the spatial streams and/or bandwidths of both links, for the communication with the second communication device.

According to the present disclosure, the communication devices and method consider the existing switching delay of the first communication device, in particular by compensating the switching delay or limiting the impact of the switching delay on the communication between the communication devices and the moment of accessing a link. As provided in an embodiment, the moment of switching between the full operation mode and the partial operation mode and/or the moment of accessing the second link in the full operation mode may be controlled based on the length of the switching delay.

The foregoing paragraphs have been provided by way of general introduction, and are not intended to limit the scope of the following claims. The described embodiments, together with further advantages, will be best understood by reference to the following detailed description taken in conjunction with the accompanying drawings.

BRIEF DESCRIPTION OF THE DRAWING

A more complete appreciation of the disclosure and many of the attendant advantages thereof will be readily obtained as the same becomes better understood by reference to the following detailed description when considered in connection with the accompanying drawings, wherein:

Fig. 1    shows a schematic diagram of the receiver architecture of a first communication device according to the present disclosure.

Fig. 2    shows a schematic diagram of the transmitter architecture of a first communication device according to the present disclosure.

Fig. 3    shows a diagram illustrating switching between full operation mode and partial operation mode.

Fig. 4    shows a schematic diagram of the receiver architecture of a second communication device according to the present disclosure.

Fig. 5    shows a schematic diagram of the transmitter architecture of a second communication device according to the present disclosure.

Fig. 6    shows a diagram generally illustrating the operation between the first and second communication devices.

Fig. 7    shows a diagram illustrating the effect and related issues of a switching delay.

Fig. 8    shows a diagram illustrating a first embodiment of the operation according to the present disclosure.

Fig. 9    shows a diagram illustrating a second embodiment of the operation according to the present disclosure.

Fig. 10   shows a diagram illustrating a third embodiment of the operation according to the present disclosure.

Fig. 11   shows a diagram illustrating the use of polarization according to a fourth embodiment of the operation according to the present disclosure.

Fig. 12   shows a diagram illustrating a fifth embodiment of the operation according to the present disclosure.

Fig. 13   shows a diagram illustrating a sixth embodiment of the operation according to the present disclosure.

Fig. 14   shows a diagram illustrating a seventh embodiment of the operation according to the present disclosure.

Fig. 15   shows a diagram illustrating an eighth embodiment of the operation according to the present disclosure.

Fig. 16   shows a diagram illustrating a ninth embodiment of the operation according to the present disclosure.

Fig. 17   shows a diagram illustrating a tenth embodiment of the operation according to the present disclosure.

Fig. 18   shows a diagram illustrating different channel access protection mechanisms in WLAN.

Fig. 19   shows a diagram illustrating an embodiment using implicit signaling according to the present disclosure.

DETAILED DESCRIPTION OF THE EMBODIMENTS

As mentioned above, an enhanced single radio non-AP MLD (a first communication device, e.g. a station STA) makes use of one radio that can be split, i.e. the radio can have two operation modes. First, it can act as a regular radio (= full operation mode), i.e. it may transmit and/or receive data with any PPDU (physical protocol data unit) types including any type of data, control, and/or management frames, different bandwidth, different modulation coding schemes (MCS) and/or spatial streams according to the IEEE 802.11ax or IEEE 802.11be standard amendment or IEEE 802.11 standard. Second, it can act as a partial radio (= partial operation mode), i.e. it may receive control frames contained in a single PPDU type modulated with limited set of modulation coding schemes (MCS) and/or spatial streams. Partial operation particularly covers the reception of ready-to-send (RTS) and/or multi-user RTS (MU-RTS) frame and carrier clear assessment (CCA) operation. In another embodiment, it is assumed that partial operation includes reception of data and/or management frames on top. In a further embodiment, transmission of control frames and/or reception of data and/or management frames on top is assumed.

If the enhanced single radio is configured to operate in full operation mode on one link, all other links are disabled (turned off), i.e. it may neither transmit nor receive on these links. The enhanced single radio may however be in partial operation mode on various links. As an implementation example, the number of spatial streams in full operation mode is N times the spatial streams in partial operation mode over N links. Thus, the spatial streams are split over different links for partial operation and are combined to one link for full operation.

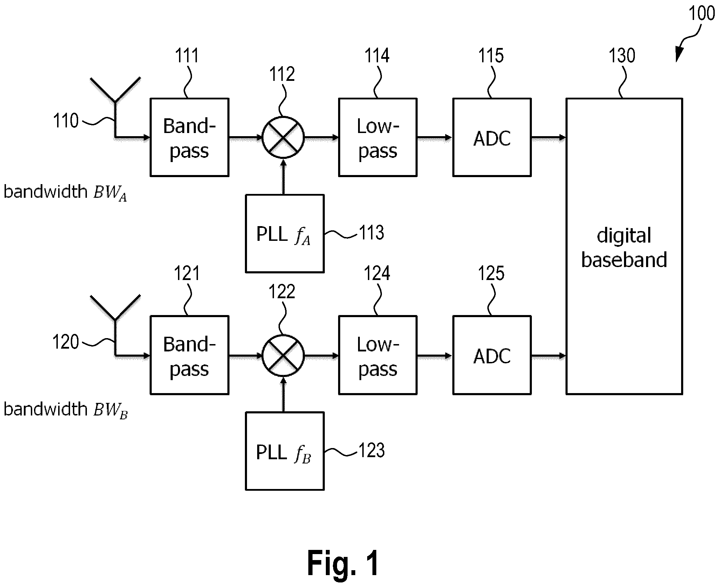

Referring now to the drawings, wherein like reference numerals designate identical or corresponding parts throughout the several views, Fig. 1 shows a schematic diagram of the receiver architecture 100 of a first communication device according to the present disclosure, in particular of a receiver with two antennas 110, 120. Each antenna 110, 120 is first connected to a band-pass 111, 121 followed by a mixer 112, 122 connected to separate phase locked loops (PLLs) 113, 123. The output of the mixer is low-pass filtered by a low-pass filter 114, 124 and passed to an analog to digital converter (ADC) 115, 125 and further processed in a digital base band processor 130. Digital based band processing is often performed jointly for all antennas, but digital based band processing separately per antenna may be provided in another embodiment. The receiver architecture 100 of this embodiment is thus able to operate on two links, each having a respective RF chain (comprising the respective ADC, low-pass filter, mixer, PLL and band-pass).

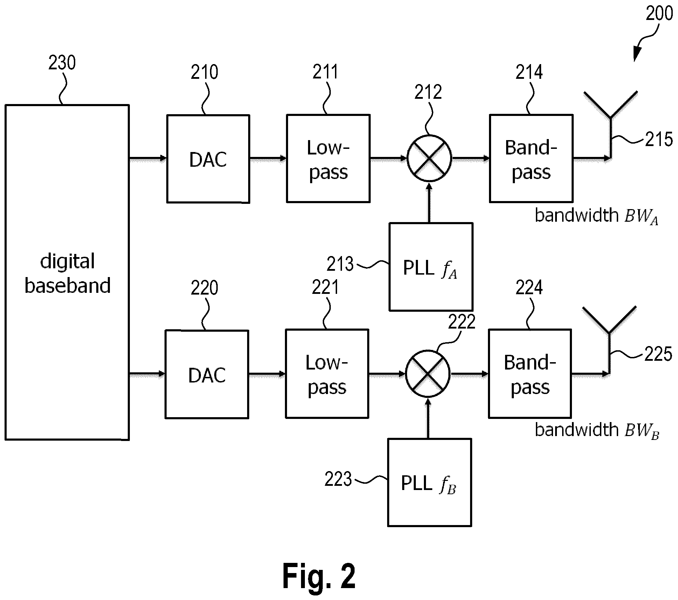

Fig. 2 shows a schematic diagram of the transmitter architecture 200 of the first communication device according to the present disclosure, in particular of a transmitter with two antennas 215, 225. A signal to be transmitted is initially base band processed by a digital base band processor 230, before it is processed by the RF chains of one or both of two existing links. Each RF chain comprises a digital to analog converter (DAC) 210, 220, followed by a low-pass filter 211, 221, followed by a mixer 212, 222 connected to separate PLLs 213, 223. The output of the mixer is band-pass filtered by a band-pass filter 214, 224, which is connected to a respective antenna 215, 225. Again, in each link a separate base band processor may be provided instead of the common base band processor 230.

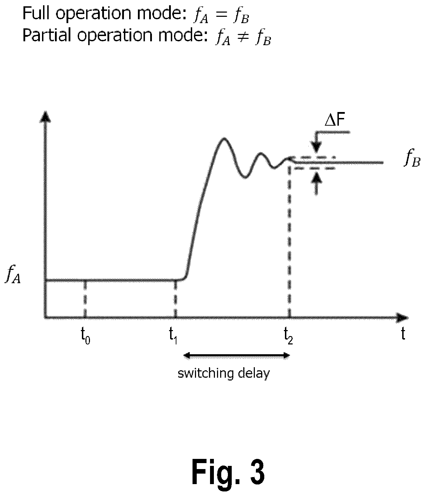

Fig. 3 shows a diagram illustrating switching between full operation mode and partial operation mode (i.e. from full operation mode to partial operation mode or from partial operation mode into full operation mode in the first communication device, which may appear both in the transmitter architecture 100 and the receiver architecture 200. Essentially, in this implementation example, frequencies $f_A$ and $f_B$ are the same or different for full or partial operation mode, respectively. It takes some time for a PLL to switch from $f_A$ to $f_B$ or vice versa. This time, the so-called switching delay, depends on the absolute difference $|f_A - f_B|$, targeted frequency accuracy $\Delta F$, and/or PLL implementation. Hence, in practice some PLL implementations are optimized for small switching delay; while in other PLL implementations a longer switching delay is often present.

In another embodiment of the first communication device (generally having the same components as shown in Figs. 1 and 2) and the same issues, the main difference between partial and full operation mode is not the number of supported spatial streams, but the bandwidth applied. Thus, in partial operation mode, the bandwidth $BW_A = BW_B$ may be 80 MHz for each observed link, whereas it is 80+80 MHz or 160 MHz in full operation mode. The number of spatial streams is unchanged. Assuming $f_A$ and $f_B$ to be the center frequency of each band in partial operation mode,

$$f_A \pm \left( \frac{BW_A}{2} + \frac{BW_B}{2} \right) = f_B$$

holds in full operation mode, i.e. both bands lie adjacent to each other. In the previous equation either + or - operator applies, depending if $f_A$ is smaller or larger than $f_B$, respectively.

The components of the transmitter architecture 200 and the receiver architecture 100 of the first communication device, except for the antennas, may generally be implemented in hard- and/or software. For instance, in one implementation a common circuitry or processor or computer may be used rather than separate hardware components. In an implementation an appropriately programmed processor or computer may realize these communication devices.

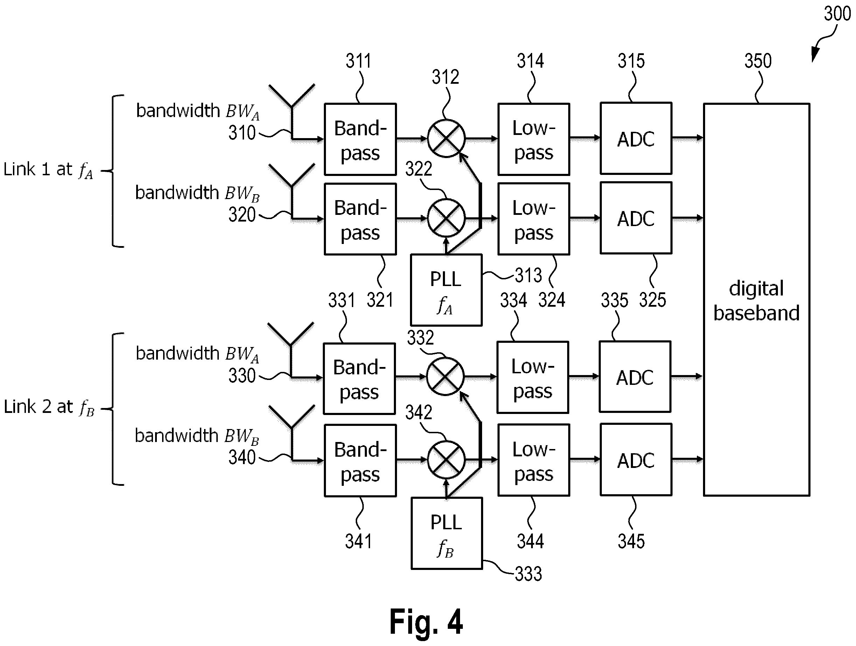

Fig. 4 shows a schematic diagram of the receiver architecture 300 of a second communication device (an AP MLD, e.g. an access point AP) according to the present disclosure, in particular of a receiver with four antennas 310, 320, 330, 340. The receiver has concurrent radios and comprises two links, each having two (or more) RF chains operating with different or same bandwidths. Each RF chain comprises a band-pass filter 311, 321, 331, 341, a mixer 312, 322, 332, 342, a PLL 313, 333 (wherein in each link the two RF chains may use the same PLL as shown in Fig. 4), a low-pass filter 314, 324, 334, 344 and an ADC 315, 325, 335, 345. The output of the ADCs is finally base-band processed by a digital base-band processor 350.

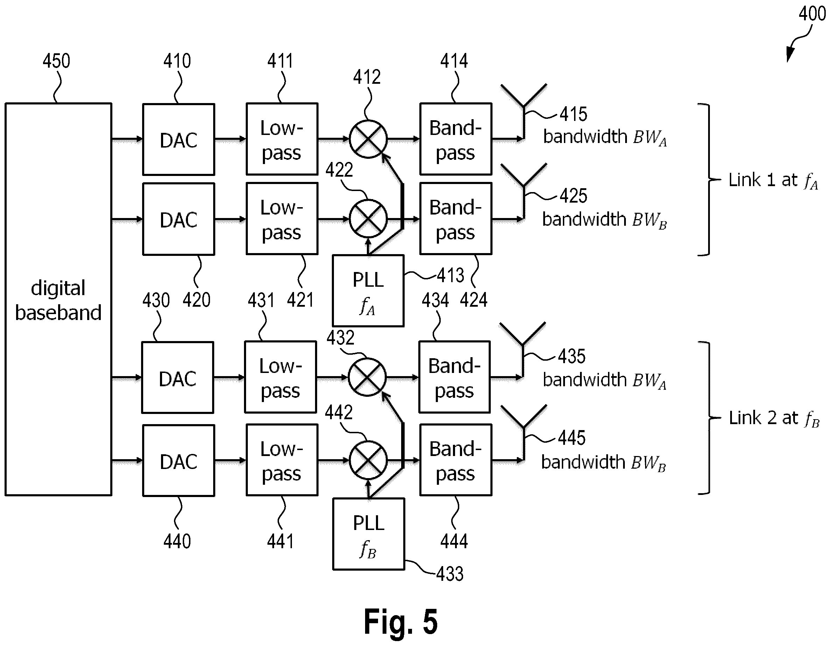

Fig. 5 shows a schematic diagram of the transmitter architecture 400 of the second communication device according to the present disclosure, in particular of a transmitter with four antennas 415, 425, 435, 445. The transmitter comprises two links, each having two RF chains operating with different bandwidths. A signal to be transmitted is initially base band processed by a digital base band processor 450, before it is processed by the RF chains of one or both of two existing links. Each RF chain comprises a DAC 410, 420, 430, 440, a low-pass filter 411, 421, 431, 441, a mixer 412, 422, 432, 432, a PLL 413, 433 (wherein in each link the two RF chains may use the same PLL as shown in Fig. 5), and a band-pass filter 414, 424, 434, 444.

According to the present disclosure, in the first communication device, the operation modes are used as follows: In the full operation mode a first link of the two links is disabled and a second link of the two links commonly uses RF chains of both links (e.g. commonly uses the bandwidths and/or spatial streams of both links) for the communication with the second communication device. In the partial operation mode, each link uses its RF chain (e.g. a respective subset of the spatial streams (i.e. one of two spatial streams of the enhanced radio) and/or bandwidths (i.e. part of the total bandwidth of the enhanced radio) of both links) for the communication with the second communication device. In particular, for bandwidth, in partial operation mode $f_A$ and $f_B$ are tuned to center frequency of each link and in full operation mode, either $f_A$ or $f_B$ is tuned such that its bandwidth lies adjacent to the bandwidth of the selected link. For spatial stream, in partial operation mode $f_A$ and $f_B$ are tuned to center frequency of each link, and in full operation mode either $f_A$ or $f_B$ is tuned to $f_B$ or $f_A$, i.e. $f_A = f_B$ and $f_B$ stays as it is, or $f_A$ stays as it is and $f_A = f_B$.

According to the present disclosure, in the second communication device, the operation modes are used as follows: In the full operation mode a first link of the two links is disabled or used for a third communication device and a second link of the two links uses at least the same number (e.g. twice the number) of RF chains as used in partial operation mode for the communication with the first communication device. In the partial operation mode, the first link is disabled or used for a third communication device and the second link uses one or more RF chains for the communication with the first communication device. In other words, the second communication device can have concurrent radios, i.e. in the full operation mode the first link may be either disabled (if second communication device is of type single radio) or used for something else (if the second communication device has concurrent radios). In partial mode the second communication device does not do anything on the first link. If it has concurrent radios, it may serve another STA. If it is of type single radio, it turns off the first link since there is nothing to transmit at all.

Figs. 4 and 5 illustrate concurrent radios at the AP MLD. If the AP MLD is of type single radio, it is same as non-AP MLD. The concurrent radio has no switching delay as PLL frequencies are unchanged. According to Fig. 5, in partial operation mode, the AP MLD choses one link which it intends to use in full operation mode later and uses one or more RF chains to initiate transmission with the non-AP MLD. Once the non-AP MLD is in full operation mode, the AP MLD applies that many RF chains as the full operation mode of the non-AP MLD requires. In case the non-AP MLD supports two links, i.e. it has two times M RF chains, the AP MLD uses twice the RF chains as used in full operation mode, i.e. 2M RF chains, whereas M RF chains are used in partial operation mode.

For example, the non-AP MLD uses one RF chain in partial operation mode and two RF chains in full operation mode and the AP MLD would like to use link 2 for data communication. Thus, referring to Fig. 5, in partial operation mode, the AP MLD selects one RF chain of link 2, i.e. either the one defined by components 430 to 435 or 440 to 445. Once the non-AP MLD is in full operation mode, i.e. it supports two RF chains, the AP MLD activates additionally the RF chain of the previously non-used RF chain of link 2. All other RF chains, i.e. the RF chains of link 1, can be used to serve other (third) non-AP MLDs.

For Fig. 4 essentially the same explanations apply, but mapped to a receiver. In partial operation mode, the AP MLD uses the same "one or more RF chains" for reception as used to initiate transmission with the non-AP MLD. Once the non-AP MLD is in full operation mode, the AP MLD applies that many RF chains for reception as the full operation mode of the non-AP MLD requires. In case the non-AP MLD supports two links, i.e. it has two times M RF chains, the AP MLD uses twice the RF chains as used in full operation mode, 2M RF chains, whereas M RF chains are used in partial mode.

For example, the non-AP MLD uses one RF chain in partial operation mode and two RF chains in full operation mode and AP MLD would like to use link 2 for data communication. Thus, referring to Fig. 4, in partial operation mode, the AP MLD selects the same RF chain of link 2 as was used to initiate transmission, i.e. either the one defined by components 330 to 335 or 340 to 345. Once the non-AP MLD is in full operation mode, i.e. it supports 2 RF chains, the AP MLD activates additionally the RF chain of the previously non-used RF chain of link 2. All other RF chains, i.e. the RF chains of link 1, can be used to serve other non-AP MLDs or STAs.

In other words, if there are two links, in an embodiment in partial operation mode the AP MLD may use one or more RF chains and in full operation mode the AP MLD may use twice the number of RF chains as used in partial operation mode, i.e. two or more RF chains (an even number). The other link may be used for communication with another (third) communication device. If there are more than two links, the AP MLD may use at least twice (e.g. three times) the number of RF chains in full operation mode as used in partial operation mode. In an embodiment, in full operation mode the AP MLD uses a number of RF chains that corresponds to the number of links on which the non-AP MLD can operate.

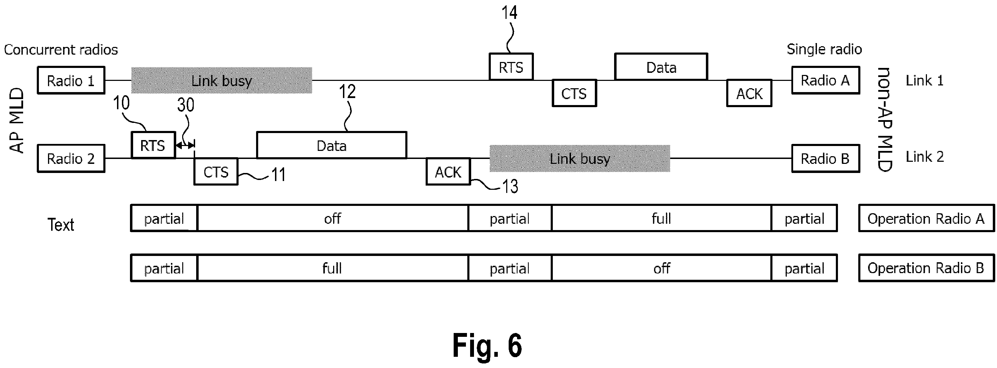

Fig. 6 shows a diagram generally illustrating the operation between the first communication device (non-AP MLD) and the second communication device (AP MLD) using two links. At the beginning, the non-AP MLD has both radios in partial operation mode. The AP MLD decides to transmit data on link 2 as link 1 is busy. It initiates data transfer by sending an RTS frame 10 (or another frame indicating the initiation of data transfer) on link 2. The RTS frame 10 indicates to the non-AP MLD that it shall configure radio B to full operation mode on link 2. Consequently, the radio A is turned off (disabled) by the non-AP MLD on link 1. Next, the non-AP MLD responds with a CTS frame 11 (or another frame confirming the initiation of data transfer) if the link is detected as idle (otherwise it does not send a CTS frame). The CTS frame 11 indicates that AP-MLD may now transmit data 12 on link 2, i.e. a TXOP (transmit opportunity) is initiated. After TXOP ends, e.g. after a response frame (ACK) 13, the non-AP MLD switches both radios A and B to partial operation mode until another RTS frame 14 addressed to it is received.

The operation illustrated in Fig. 6 assumes instantaneous switch between the two operation modes. Due to implementation, the switching operation takes time, often more than what is allowed from a frame exchange perspective. For example, the time interval 30 between RTS transmission and CTS response is SIFS (short inter frame spacing), i.e. 10 $\mu$s (at 2.4 GHz) or 16 $\mu$s (at 5 GHz). If more time is spent, it may be considered as a missing CTS, or another communication device (station) may access the channel.

Furthermore, while operating on a single link, i.e. full operation mode, the non-AP MLD cannot receive frames on the non-operative links. Thus, rules are defined according to the present disclosure when to access the non-operative links after a single radio phase.

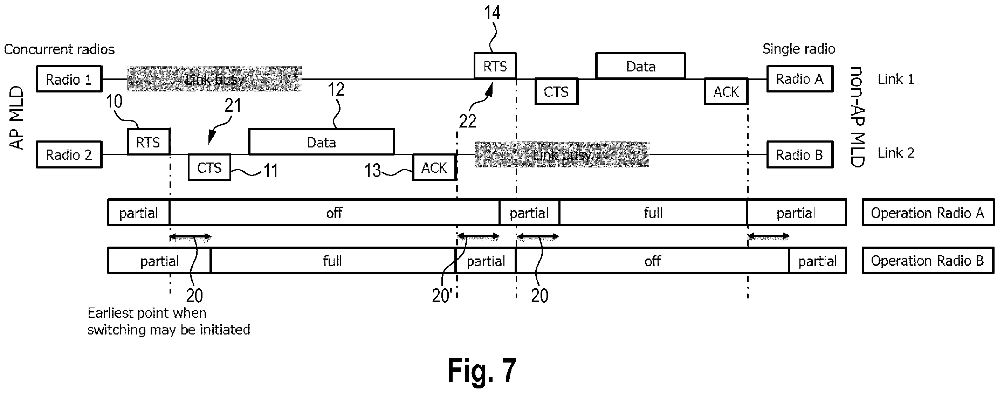

Fig. 7 shows a diagram illustrating the effect and related issues of a switching delay based on the example illustrated in Fig. 6. First, it should be noted that during switching from partial operation mode to full operation mode, the partial operation mode continues on the link which will later use full operation mode. After a certain time, referenced as switching delay (also called operation switching delay), the radio will be switched to full operation mode by the non-AP MPD. The radio of the unused link, however, will be turned off immediately. This is because it takes some time until the phase locked loop (PLL) of the non-used link settles on the carrier frequency of the used link, i.e. the link with intended full operation mode. The switching delay may also be variable, meaning that a PLL requires a PPDU (or any data unit or frame) to be received before it may settle on a new carrier frequency. Thus, the reception of a PPDU or at least its header is a requirement for a locked PLL.

A first issue is indicated in Fig. 7 as 21: Due to the switching delay 20, the CTS frame 11 cannot be transmitted in full operational mode of radio 2. A second issue is indicated in Fig. 7 as 22: Due to the switching delay 20', the non-AP MLD misses the RTS frame 14 on link 1 which would be important for future operation. Even in case the RTS frame 14 was not directed to the non-AP MLD under consideration, it is of importance for NAV (network allocation vector) setting, i.e. a channel busy indication or virtual CCA.

On top of that, the operation illustrated in Figs. 6 and 7 assume RTS/CTS exchange to avoid a hidden node problem. However, hidden nodes are sometimes not present; hence, RTS/CTS exchange may add too much overhead. If partial and full operation modes have different operating bandwidths, the protection offered by RTS frames and/or CTS frames transmitted in partial operation mode relates to the bandwidth of the partial operation mode. If the bandwidth in full operation mode should increase, further protection may be provided, which, however, is currently not provided according to the IEEE 802.11 standards.

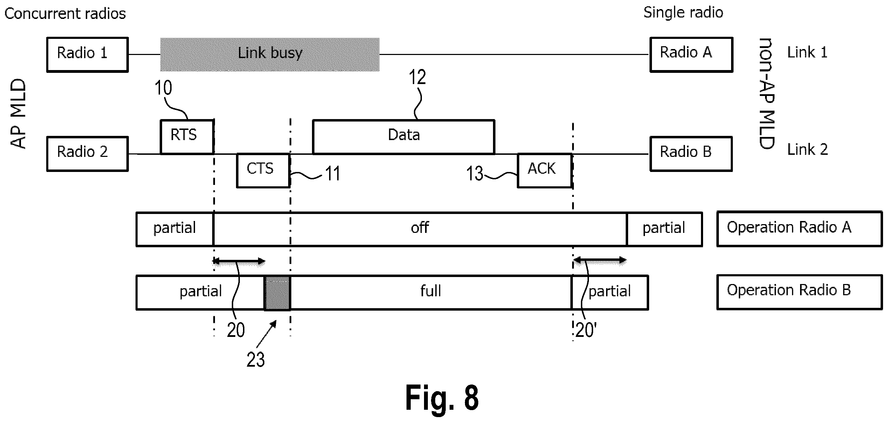

Fig. 8 shows a diagram illustrating a first embodiment of the operation according to the present disclosure. If the switching delay 20 is less than SIFS, no special measures generally need to be taken since after an operation switch request (e.g. RTS) the response frame (e.g. CTS) may be transmitted in full operation mode. Otherwise, the response frame transmission and reception of subsequent data frames uses partial operation mode, meaning that such communication has a low rate and PPDU-type restrictions. Since transitions between partial and full operational mode cannot be done within a PPDU, partial operation mode needs to continue until the currently transmitted or received PPDU ended. Thus, full operation mode may already be available but not used as shown in Fig. 8. Hence, according to this embodiment switching into the full operation mode on the second link is delayed, as indicated by delay 23, until transmission of a frame (the CTS frame 11 in the example shown in Fig. 8) that is currently ongoing at the end of the switching delay has been completed.

It is noted that switching the link has an effect for both links: The first link is immediately turned off. The second link stays all the time in partial operation mode until the switching delay passed. After that it is in full operation mode. Switching to full operation mode is a constraint to the fact that no frame is currently transmitted. This implies that the digital base band processor does not consider the output of the RF chain of the previously first link.

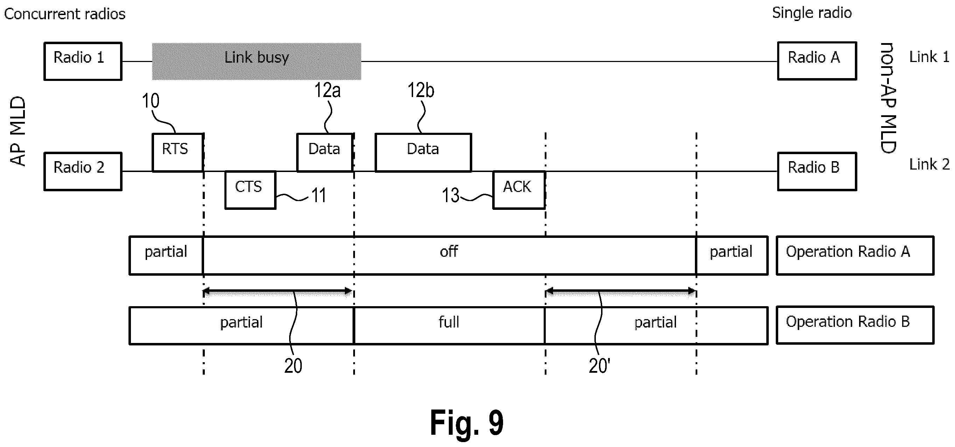

Fig. 9 shows a diagram illustrating a second embodiment of the operation according to the present disclosure. If the switching delay 20 is very long, it may even affect data transmission as shown in Fig. 9. Here, the downlink PPDU containing the data is split in two parts 12a, 12b. The first part 12a is transmitted in partial operation mode by the AP MLD and received in partial operation mode by the non-AP MLD. When the switching delay has passed, the AP MLD stops transmission of the first part but continues within a time interval of SIFS or RIFS (reduced inter frame spacing) with a second part 12b which is transmitted in full operation mode. As illustrated in Fig. 9, the first PPDU, i.e. the first part 12a, is not followed by a response frame (e.g. ACK), as this avoids support of another control frame by the non-AP MLD, i.e. ACK by radio B in partial operation mode.

If the transmit queue that holds the data to be transmitted is short, it may be considered if a PPDU split provides an advantage in terms of transmit time. Thus, a PPDU split is preferably considered when the following equation is fulfilled:

$$TXTIME\big(PPDU_{partial}\big) > TXTIME\big(1st\ PPDU_{partial}\big) + SIFS + TXTIME(2nd\ PPDU_{full})$$

Hence, according to this embodiment, a first part of a frame exchange (in particular a data unit, such as a PPDU) is transmitted or received in partial operation mode before a switching time or the completion of switching from the partial operation mode into the full operation mode a second part of said frame exchange is transmitted or received in full operation mode after the completion of switching from the partial operation mode into the full operation mode.

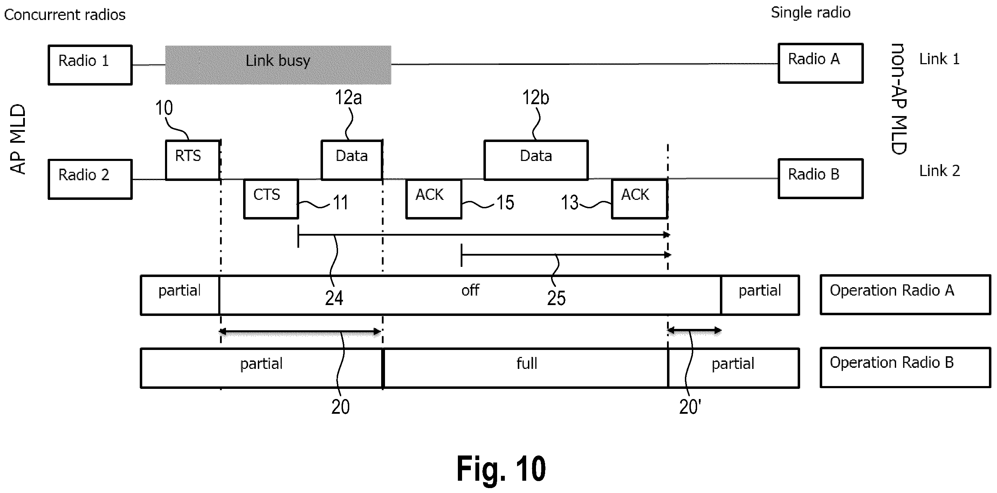

Fig. 10 shows a diagram illustrating a third embodiment of the operation according to the present disclosure. If the CTS frame 11 is transmitted in partial operation, the protection of the data transfer by the CTS frame 11 covers less transmit features than used in later full operation mode. For example, in partial operation mode, one transmit antenna may be used, whereas in full operation mode two transmit antennas are used. Consequently, the protection provided by a CTS frame 11 transmitted in partial operation is limited. Therefore, it is suggested in this embodiment to send a CTS frame (or any other frame that may set the NAV in an observing STA) by the non-AP MLD once having switched to full operation mode. An example is illustrated in Fig. 10, according to which a first NAV setting 24 is done by the CTS frame 11 (where the non-AP MLD is still in partial operation mode) and a second NAV setting 25 is done by an ACK frame 15 (where the non-AP MLD is already in full operation mode). The duration of the NAV signaled in each frame points always to the end of the TXOP (indicated by the arrows 24 and 25).

Hence, according to this embodiment, before and/or after transmission or receipt of the first part 12a of the frame exchange, allocation information (e.g. the NAV setting) indicating an allocation period for which the second link is allocated to the first and second communication devices for data communication is transmitted.

The re-transmission of a CTS frame or the transmission of an ACK frame for the purpose of distributing the NAV setting in full operation mode may be avoided, when the partial operation mode partially includes the full operation mode. Assuming that transmit antennas serve sufficiently different polarizations, e.g. orthogonal (horizontal and vertical) or quasi-orthogonal polarization leading to a sufficient cross attenuation, the spatial separation provided by the channel is very high. Thus, the protection in partial operation mode protects only one polarization and redistribution of the NAV in full operation mode is preferred.

However, if the transmit antennas serve orthogonal linear combinations of different (e.g. orthogonal (horizontal and vertical) or quasi-orthogonal) polarizations, transmission with a single transmit antenna covers both polarizations but with reduced power for each polarization. Nonetheless, the difference to full operation mode is less compared to transmission on a single polarization. While typical polarization discrimination is about 20 dB, the power loss when using a linear combination is about 3 dB if the transmit power is equally split between polarizations.

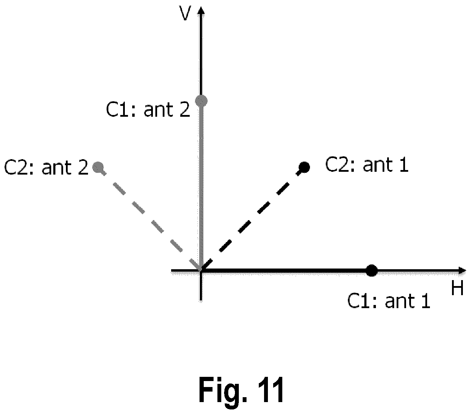

Fig. 11 shows a diagram illustrating the use of polarization according to a fourth embodiment of the operation according to the present disclosure. Fig. 11 particularly illustrates two exemplary configurations of transmit antenna polarization. In configuration 1 (C1), antenna 1 covers horizontal polarization whereas antenna 2 covers vertical polarization. In configuration 2 (C2), antenna 1 and antenna 2 covers a mix of both polarizations, wherein both polarizations are still orthogonal so that both may digitally be separated in horizontal and vertical components.

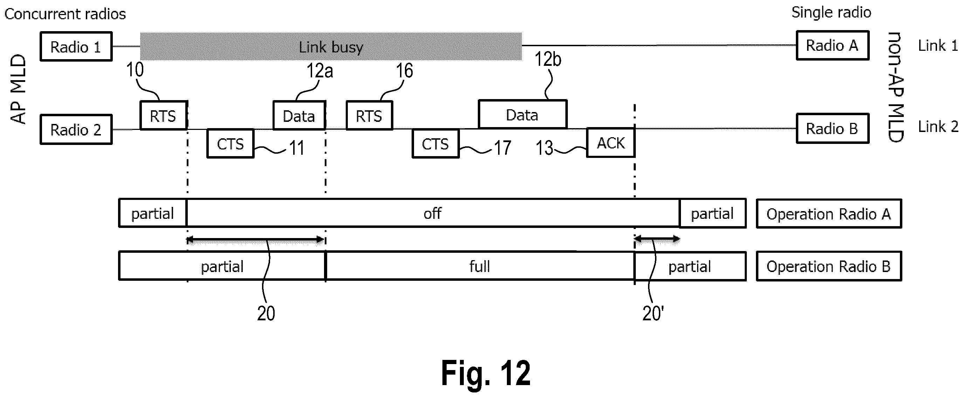

Fig. 12 shows a diagram illustrating a fifth embodiment of the operation according to the present disclosure. If the CTS frame 11 transmitted in partial operation mode has less bandwidth compared to full operation mode, the following rules shall hold before transition to full operation mode.

The initiator of the data transfer, i.e. the one that initially transmitted an RTS frame 10 in partial operation mode, shall transmit another RTS frame 16 in full operation mode, i.e. with increased bandwidth, if the new part of the bandwidth was detected as idle for a time interval of PIFS (priority inter frame spacing) before transmitting the RTS frame 16 in full operation mode.

The responder of the data transfer, i.e. the one that initially transmitted a CTS frame 11 in partial operation mode, shall transmit another CTS frame 17 in full operation mode, i.e. with increased bandwidth, if the new part of the bandwidth was detected as idle for a time interval of PIFS before transmitting the CTS frame 17 in full operation mode and if it has previously received a RTS frame 16 in full operation mode.

After the RTS/CTS exchange in full operation mode, data transfer may start (or continue) in full operation mode, i.e. the second part 12b of the data unit may be transmitted with increased bandwidth. If at least one of the RTS frame 16 or the CTS frame 17 was transmitted in partial operation mode, the data transfer shall use the bandwidth of the partial operation mode.

While this embodiment has been illustrated in Fig. 12 with reference to an RTS frame 16 and a CTS frame 17, in general a bandwidth change request frame indicating a request to change the bandwidth (instead of the RTS frame 16) and a bandwidth change acknowledge frame indicating a confirmation of the change (instead of the CTS frame 17) may be used. Further, the transmission of the RTS frame 16 (or a bandwidth change request frame) in full operation mode may be subject to detection of channel idleness on the bandwidth that is added in full operation mode. For the CTS frame 17 (or the bandwidth change acknowledge frame) the same condition may be applied in addition to the reception of the RTS frame 16 (or a bandwidth change request frame).

Alternatively, on top of channel detection as idle PIFS before transmitting the RTS or CTS frames 16, 17, a NAV equal to zero at the initiator and/or responder of the new bandwidth part may additionally be considered.

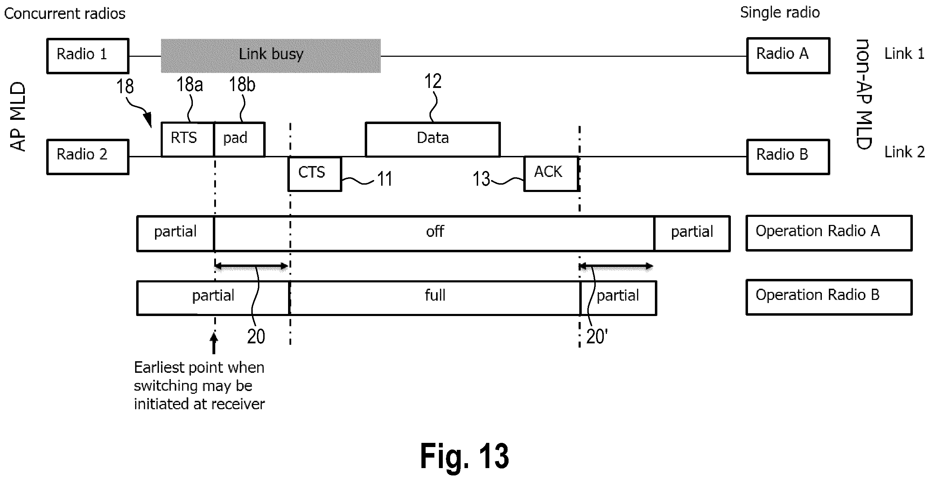

Fig. 13 shows a diagram illustrating a sixth embodiment of the operation according to the present disclosure. According to this embodiment the switching delay is compensated by prolonging a switching request (e.g. a RTS frame or a MU-RTS frame, i.e. a variant of the RTS frame 10) such that the related response can be transmitted within SIFS in full operation mode. In the example shown in Fig. 11 the request frame 18 is split into two parts: The first part 18a (which may correspond to the RTS frame 10) contains the actual operation switch request, i.e. the receiver is aware of the switch request after the first part is received. The second part 18b is provided to compensate the switching delay 20 by the receiver such that a receiving STA may respond SIFS after the end of the second part 18b in full operation mode. The content of the second part 18b may be padding or duplicated data, i.e. the first part 18a of the request frame may be duplicated. The two parts 18a and 18b of the request frame may be part of the same PPDU.

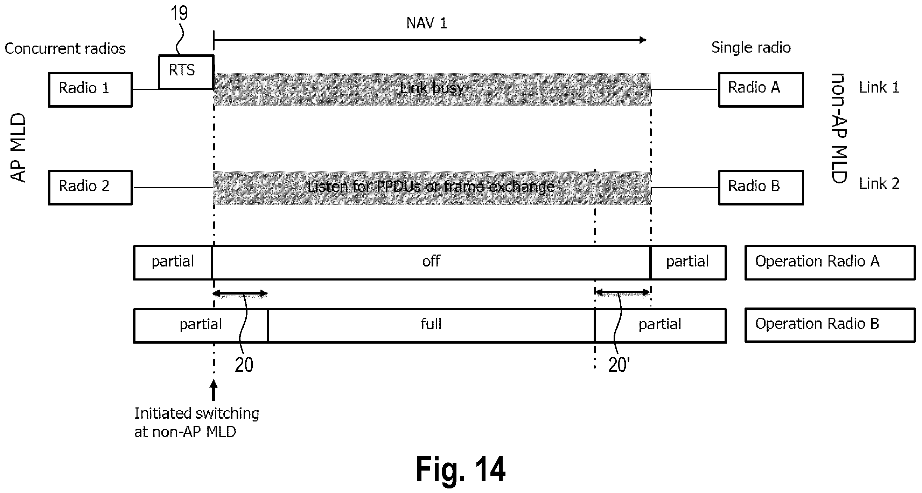

Fig. 14 shows a diagram illustrating a seventh embodiment of the operation according to the present disclosure. If radio A of the non-AP MLD detects link 1 to be busy and the duration (NAV 1) of the link occupancy is known (e.g. by RTS or CTS or any other frame holding duration information), the non-AP MLD may already switch to link 2 precautionary to have full operation readily available on link 2 once it is needed. In the embodiment illustrated in Fig. 14 an RTS frame 19 on link 1 sets the NAV 1 on link 1.

Consequently, the non-AP MLD switches to full operation on link 2. The following behavior holds for the "Listen for PPDUs or frame exchange" phase within Fig. 10: If the non-AP MLD is not involved in a frame exchange (e.g. data transfer) with the AP MLD on link 2, it shall switch operation to partial operation mode such that partial operation mode is available once link 1 is predicted to be idle, i.e. NAV 1 equal zero. If the non-AP MLD is involved in a frame exchange with the AP MLD on link 2, it shall stay on the link and finish the frame exchange. If the non-AP MLD receives a frame (the RTS frame 19 in this example) which indicates that link 2 is occupied until "NAV 1 minus switching delay" or longer, the non-AP MLD may switch to partial operation mode on both links or full operation mode on link 1.

Hence, in an implementation of this embodiment the second link is switched to full operation mode after receipt of allocation period information (in this example NAV 1) on the first link, the allocation period information indicating that the first link is allocated to a third communication device for data communication. Subsequently, the first link is switched to partial operation mode an advance period before the end of the allocation period, the advance period corresponding to the switching delay 20 or 20' or a longer time period.

It may be useful for the AP MLD to know what type of operation the non-AP MLD currently applies. This information may be transferred via frames sent by the non-AP MLD. It may either be done by signaling within a frame or by implicit detection, as will be explained below.

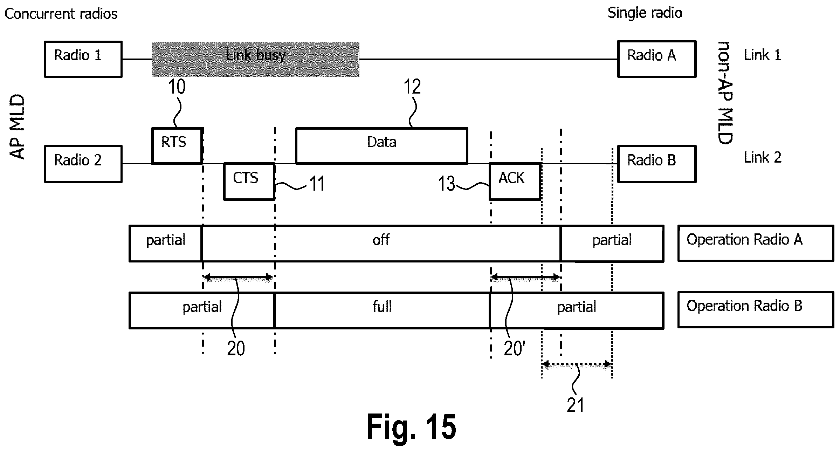

Fig. 15 shows a diagram illustrating an eighth embodiment of the operation according to the present disclosure. Often the ACK response does not benefit of full operation as it is a very short frame and a large preamble overhead is not desired. Additionally, the data rate is selected low to achieve high reliability of successful ACK detection. This may be exploited the reduce the switching delay as illustrated in Fig. 15, in which the switching delay 20' in this embodiment is illustrated in comparison to the switching delay 21 without this embodiment to show the difference in availability on the first link).

If the last ACK frame 13 of a frame exchange transmitted by either the non-AP or AP MLD is sent such that the partial operation mode is sufficient, the non-AP MLD may switch to partial operation mode on that link. As can be seen in Fig. 15, radio A of link 1 is much earlier in partial listening mode compared to the case if the ACK frame were sent in full operation mode. Since the ACK frame 13 is transmitted in partial operation mode, it may be less robust than ab ACK frame transmitted in full operation mode. Thus, the ACK frame transmitted in partial operation mode should apply a more robust modulation and/or coding on PHY layer compared to full operation mode.

Hence, according to this embodiment, after data reception on the second link is completed, it is switched into the partial operation mode on the second link and acknowledgement information acknowledging receipt of the data is transmitted on the second link in the partial operation mode. Preferably, the acknowledgement information is transmitted with a lower code rate and/or a more robust modulation than the data rate and modulation used for reception of the data.

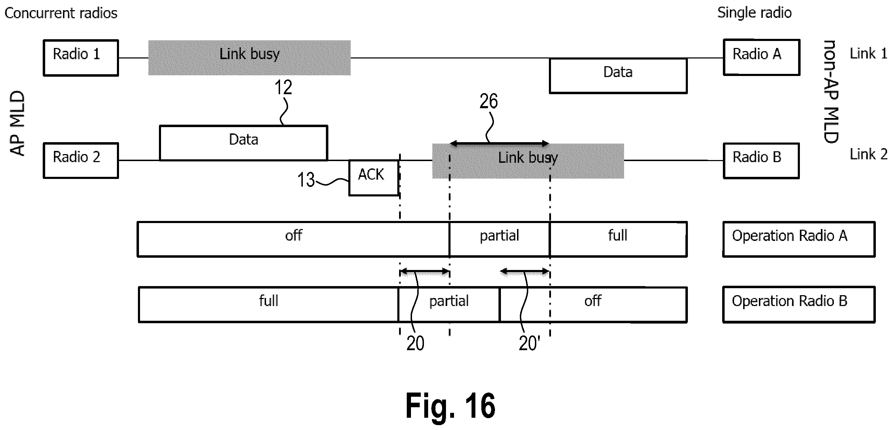

In the following the behavior of a non-AP MLD when initiating the data transfer will be explained. Fig. 16 shows a diagram illustrating a ninth embodiment of the operation according to the present disclosure. The non-AP MLD generally follows regular channel access rules such as physical carrier clear assessment (CCA) and virtual CCA (i.e. NAV=0). Since both radios of the AP MLD are available at all times, the non-AP MLD may transmit anytime and in any transmitter configuration as long as channel access rules are not violated. Thus, it may either initiate transmission in partial or in full operation mode. However, if the non-AP MLD has just switched from full to partial operation mode, it may have missed frames that set the NAV on the link that has not been observed. Consequently, if a non-AP MLD has switched from full to partial operation mode, it shall wait for a certain minimum time span 26 (also called observing period) and listen for frames until it may access that link. This behavior is defined to get a NAV update on the non-observed link. All regular channel access rules may apply on top.

A preferred operation for the non-AP MLD is to choose that link for an uplink transmission on which it was in full or partial operation mode before. By doing so, it avoids the observing period and may access the channel faster. In Fig. 16 this link corresponds to link 2, which is however assumed to be busy according to this example. The length of the observation period may be set by the AP MLD or the non-AP MLD, e.g. depending on the number of neighboring STAs or MLDs.

Hence, according to this embodiment the non-AP MLD listens, after switching from full operation mode into partial operation mode, for allocation information transmitted by a third communication device, on the link that has been disabled while the first communication device has been in the previous full operation mode, before accessing said link for data transmission, the allocation information indicating an allocation period for which said link is allocated to a third communication device for data communication.

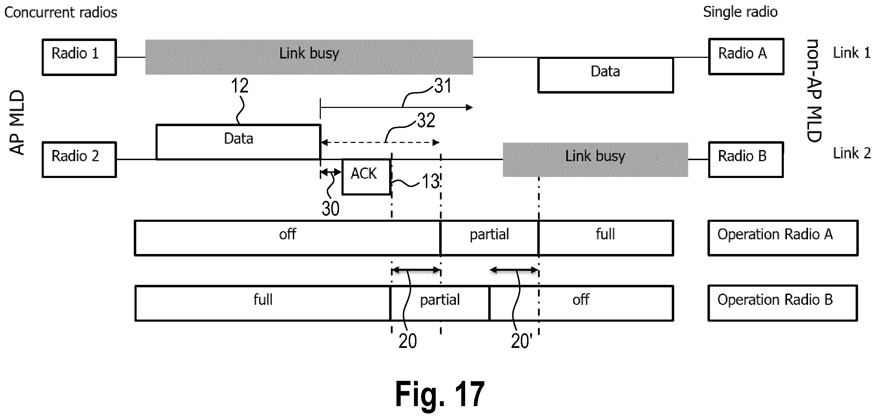

Fig. 17 shows a diagram illustrating a tenth embodiment of the operation according to the present disclosure. As an alternative, signaling of NAV information of the unused link via the used link may be applicable. In this case, the AP MLD includes the current NAV information in a frame transmitted to the non-AP MLD. For this to work, the NAV of the unused link shall be longer than the time it takes for the radio to switch to partial operation mode to the formerly unused link. If this condition is not met, the minimum observing period shall be considered by the non-AP MLD. Fig. 17 illustrates the envisioned operation of NAV signaling in case that NAV of the unused link is longer than inter frame spacing 30 (e.g. SIFS), ACK response 13 and switching delay 20, i.e. the time it takes for the radio to switch to partial operation mode on the formerly unused link.

Here, "NAV of link 1" 31 may be signaled within the data frame 12, for example as part of the PPDU header, as a frame, as a subframe or as part of the MPDU header (e.g. A-Control subfield). Further, Fig. 17 shows the minimum time span of NAV of link 1 for the non-AP MLD not to use the minimum observation period. In other words, if the signaled NAV is shorter than the minimum time span indicated by "minimum NAV time of link 1" 32, the non-AP MLD shall consider the minimum observation period 26 as shown in Fig. 16.

Hence, according to this embodiment the non-AP MLD listens on the second link to allocation information indicating an allocation period (e.g. a NAV) for which the first link is allocated to a third communication device for data communication. Hereby, the allocation period may be longer than the switching delay or a predetermined time period.

An operation switch request may need to be transmitted by the AP STA to the peer non-AP STA. Such a signaling may be part of an RTS frame as explained above. Similarly, such a signaling may be also part of a CTS frame or a CTS-to-self indication as well as in any data frame. As each non-AP MLD has a specific link switch delay which is unknown to the AP, each non-AP MLD shall announce its switching delay to the AP MLD, e.g. during a setup phase, for instance within an association request.

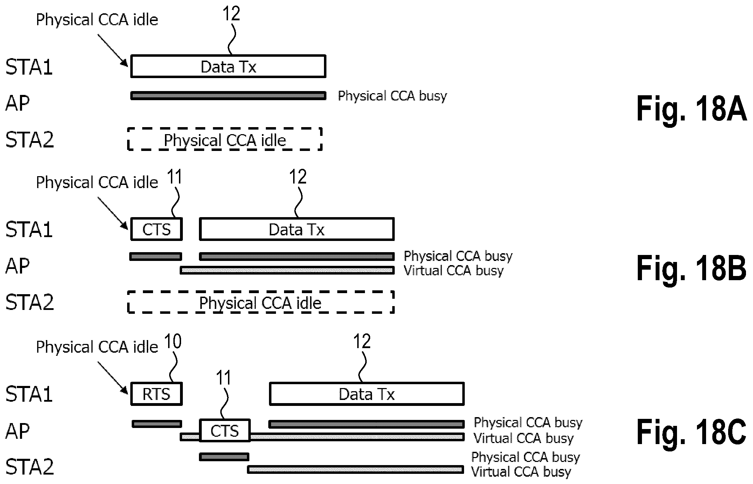

Fig. 18 shows a diagram illustrating different channel access protection mechanisms in WLAN. Fig. 18 particularly illustrates different protection mechanisms, including no protection (Fig. 18A), CTS-to-self (Fig. 18B), and RTS-CTS (Fig. 18C). In any of the three cases shown in Fig. 18, the first frame that is transmitted by STA 1 is transmitted such that in may be understood by STA 2 in partial operation mode.

In the first case (Fig. 18A), the data TX part 12 may be split into two parts, i.e. the first part using transmitter settings that can be received in partial operation mode and the second part using transmitter settings that can be received in full operation mode as described above. In the second case (Fig. 18B), the CTS frame 11 is transmitted such that it can be received in partial mode. It may also be padded (similarly to the RTS or MU-RTS padding described above) and/or it may be followed by split data frames if required. The third case (Fig. 18C) using an RTS frame 10 and a CTS frame 11 has been the baseline for the previously explained embodiments of operation. An operation switch response transmitted by the non-AP MLD to the AP MLD may be included in a frame e.g. the CTS frame.

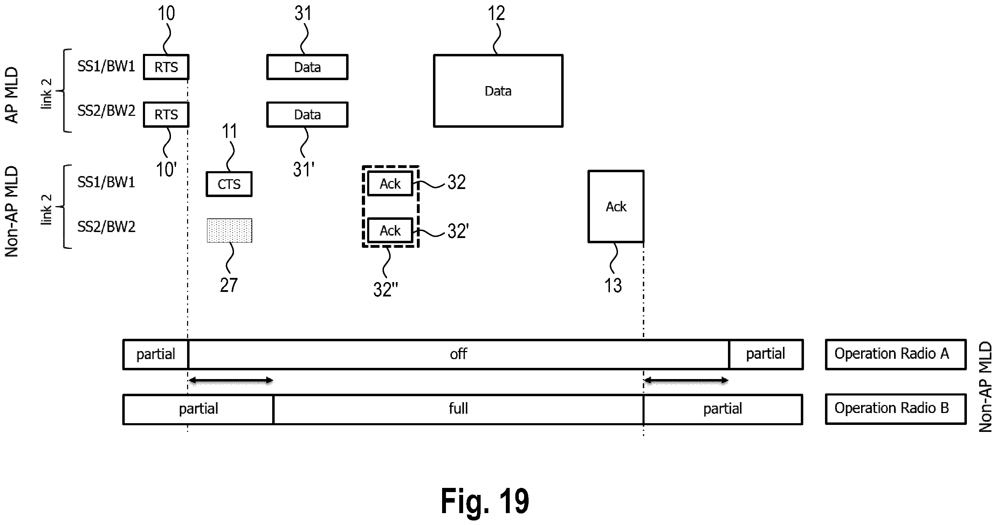

Alternatively, an implicit signaling can be done. The non-AP MLD uses for any transmission the TX parameters that it currently supports, even though they may not be needed. Fig. 19 shows a diagram illustrating an embodiment using implicit signaling according to the present disclosure. Fig. 19 is similar to Fig. 10, but shows the operations in more detail.

The AP-MLD wants to initiate a transmission on link 2 and transmits an indication for transmission initiation (e.g. RTS). Under the assumption that the TX parameter in partial operation mode is 1x1 MIMO, whereas it is 2x2 MIMO in full operation mode, both spatial streams are indicated by SS1 and SS2 in Fig. 19.

The AP-MLD transmits the RTS frame 10, 10' in duplicated mode, which means that the information on both spatial streams SS1 and SS2 is essentially duplicated but may have slightly different settings for the receiver PHY to differentiate the streams. As the non-AP MLD is in partial operation mode at the point in time of transmission of the CTS frame 11, it can use only one spatial stream, e.g. SS1 in the example shown in Fig. 19. The other spatial stream is left empty, as indicated by 27. The AP MLD detects the emptiness and concludes that the non-AP MLD has been in partial operation mode. Thus, it transmits the subsequent data frames 31, 31' in duplicated fashion such that the non-AP MLD can demodulate them.

Once the non-AP MLD responds (e.g. with an ACK frame) and it is in full operation mode, it either transmits the response frame in duplicated mode (e.g. ACK frames 32, 32') on both spatial streams or in wideband mode (ACK frame 32"), i.e. using both spatial streams jointly. The AP MLD detects that the second spatial stream is used and concludes that the non-AP MLD is in full operation mode at the point in time of transmission. In the following, AP MLD and non-AP MLD use both spatial streams or wideband operation for the rest of the transmission opportunity, i.e. for transmitting the data 12 until the last frame (the second ACK frame 13) has been transmitted.

In other words, the non-AP MLD transmits with 2x2 MIMO as soon as it is in full operation mode even if 2x2 MIMO is not needed. This implies that spatial duplication may be required (e.g. for the first ACK frame 32, 32'), i.e. duplication of same information on spatial resources. By analysis of the received PPDU type, e.g. one or two transmit antennas applied, the AP-MLD detects the supported operation mode.

Hence, according to this embodiment the mode of operation is implicitly signaled to the second communication device after reception of a switching request frame by transmitting a frame in partial operation mode if the operation mode is partial operation mode or by transmitting a frame in full operation mode, wherein the information contained in the frame is duplicated or non-duplicated over the RF chains of both links if the operation mode is full operation mode.

According to the present disclosure rules for operation of a single radio STA in a multi-link environment with non-negligible link switching delay are provided by one or more of transmission in partial operation, rules for transition to full operation mode, control frame padding, predictive link switch, early link switch, and minimum observation period. Further, options for implicit and explicit signaling are provided. The present disclosure thus provides for an efficient use or compensation of the switching delay, in particular to avoid a loss of time for waiting for the switching delay to pass or to avoid any loss of information in the communication between the communication devices.

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, the disclosure of the present disclosure is intended to be illustrative, but not limiting of the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such a software may also be distributed in other forms, such as via the Internet or other wired or wireless telecommunication systems.

The elements of the disclosed devices, apparatus and systems may be implemented by corresponding hardware and/or software elements, for instance appropriated circuits or circuitry. A circuit is a structural assemblage of electronic components including conventional circuit elements, integrated circuits including application specific integrated circuits, standard integrated circuits, application specific standard products, and field programmable gate arrays. Further, a circuit includes central processing units, graphics processing units, and microprocessors which are programmed or configured according to software code. A circuit does not include pure software, although a circuit includes the above-described hardware executing software. A circuit or circuitry may be implemented by a single device or unit or multiple devices or units, or chipset(s), or processor(s).

It follows a list of further embodiments of the disclosed subject matter:

1. First communication device configured to communicate with a second communication device via two links, the first communication device comprising circuitry configured to

- switch between a full operation mode and a partial operation mode,

  wherein in the full operation mode a first link of the two links is disabled and a second link of the two links commonly uses RF chains of both links for the communication with the second communication device and wherein in the partial operation mode each link uses its RF chain for the communication with the second communication device; and

- control the moment of switching between the full operation mode and the partial operation mode and/or the moment of accessing the second link in the full operation mode under consideration of a switching delay indicating a delay between the initiation of switching between the full operation mode and the partial operation mode and the completion of the switching.

2. First communication device as defined in embodiment 1, wherein the circuitry is configured to control the moment of switching between the full operation mode and the partial operation mode and/or the moment of accessing the second link in the full operation mode based on the length of the switching delay.

3. First communication device as defined in any one of the preceding embodiments, wherein the circuitry is configured to delay switching into the full operation mode on the second link until transmission of a frame that is currently ongoing at the end of the switching delay has been completed.

4. First communication device as defined in any one of the preceding embodiments, wherein the circuitry is configured to transmit and/or receive a first part of a frame exchange in partial operation mode before a switching time or the completion of switching from the partial operation mode into the full operation mode and to transmit and/or receive a second part of said frame exchange in full operation mode after the completion of switching from the partial operation mode into the full operation mode.

5. First communication device as defined in embodiment 4, wherein the circuitry is configured to receive a first part of a data unit in partial operation mode before a switching time or the completion of switching from the partial operation mode into the full operation mode and to receive a second part of the data unit in full operation mode after the completion of switching from the partial operation mode into the full operation mode.

6. First communication device as defined in embodiment 4 or 5, wherein the circuitry is configured to transmit, before and/or after transmission or receipt of the first part of the frame exchange, allocation information indicating an allocation period for which the second link is allocated to the first and second communication devices for data communication.

7. First communication device as defined in embodiment 6, further comprising two antennas, each antenna comprising one or more antenna elements, wherein a first antenna is configured to transmit and/or receive with a first linear combination of a first and a second polarization and the second antenna is configured to transmit and/or receive with a second linear combination of a first and second polarization different from the first linear combination.

8. First communication device as defined in any one of embodiments 4 to 7, wherein the circuitry is configured to receive in full operation mode, after completion of the first part of the frame exchange, a bandwidth change request frame or a ready-to-send, RTS, frame and to transmit in full operation mode, after receipt of the bandwidth change request frame or the RTS frame, a bandwidth change acknowledge frame or a clear-to-send, CTS, frame.

9. First communication device as defined in any one of the preceding embodiments, wherein the circuitry is configured to

- receive a switching request frame in the partial operation mode, the switching request frame indicating that the first communication device shall switch into the full operation mode,
- initiate switching into the full operation mode,
- receive padding data in the partial operation mode before switching into the full operation mode is completed, and
- transmit a switching confirmation frame in the full operation mode after the switching into the full operation mode has been completed.

10. First communication device as defined in any one of the preceding embodiments,
wherein the circuitry is configured to

switch the second link to full operation mode after receipt of allocation period information on the first link, the allocation period information indicating that the first link is allocated to a third communication device for data communication, and
switch the first link to partial operation mode an advance period before the end of the allocation period, the advance period corresponding to the switching delay or a longer time period.

11. First communication device as defined in any one of the preceding embodiments,
wherein the circuitry is configured to switch, after data reception on the second link is completed, into the partial operation mode on the second link and to transmit acknowledgement information acknowledging receipt of the data on the second link in the partial operation mode.
12. First communication device as defined in embodiment 11,
wherein the circuitry is configured to transmit the acknowledgement information with a lower code rate and/or a more robust modulation than the data rate and modulation used for reception of the data.
13. First communication device as defined in any one of the preceding embodiments,
wherein the circuitry is configured to listen, after switching from full operation mode into partial operation mode, for allocation information transmitted by a third communication device, on the link that has been disabled while the first communication device has been in the previous full operation mode, before accessing said link for data transmission, the allocation information indicating an allocation period for which said link is allocated to a third communication device for data communication.
14. First communication device as defined in any one of the preceding embodiments,
wherein the circuitry is configured to listen on the second link to allocation information indicating an allocation period for which the first link is allocated to a third communication device for data communication.
15. First communication device as defined in embodiment 14,
wherein the allocation period is longer than the switching delay or a predetermined time period.
16. First communication device as defined in any one of the preceding embodiments,
wherein the circuitry is configured to explicitly signal the switching delay to the second communication device and/or to receive confirmation from the second communication device to apply the full operation mode.
17. First communication device as defined in any one of the preceding embodiments,
wherein the circuitry is configured to implicitly signal its mode of operation to the second communication device after reception of a switching request frame by transmitting

- a frame in partial operation mode if the operation mode is partial operation mode or
- a frame in full operation mode, wherein the information contained in the frame is duplicated or non-duplicated over the RF chains of both links if the operation mode is full operation mode.

18. First communication device as defined in any one of the preceding embodiments,
wherein in the full operation mode the first link is disabled and the second link commonly uses the bandwidths and/or spatial streams of both links for the communication with the second communication device and wherein in the partial operation mode each link uses a respective subset of the spatial streams and/or bandwidths of both links for the communication with the second communication device.
19. First communication device as defined in any one of the preceding embodiments,

wherein the first communication device is configured to communicate with the second communication device via three or more links,
wherein in the full operation mode all links except for the second link of the three or more links are disabled and the second link of the three or more links commonly uses RF chains of two or more links for the communication with the second communication device.

20. Second communication device configured to communicate with a first communication device via two links, the second communication device comprising circuitry configured to

- switch between a full operation mode and a partial operation mode,

wherein in the full operation mode a first link of the two links is disabled or used for a third communication device and a second link of the two links uses at least the same number of RF chains as used in partial operation mode for the communication with the first communication device and
wherein in the partial operation mode the first link is disabled or used for a third communication device and the second link uses one or more RF chains for the communication with the first communication device; and

- control the transmission of data and/or control information to the first communication device under consideration of a switching delay of the first communication device, the switching delay indicating a delay between the initiation of switching between the full operation mode and the partial operation mode and the completion of the switching.

21. Second communication device as defined in embodiment 20,
wherein the circuitry is configured to transmit and/or receive a first part of a frame exchange in partial operation mode before a switching time or the completion of switching from the partial operation mode into the full operation mode and to transmit and/or receive a second part of said frame exchange in full operation mode after the completion of switching from the partial operation mode into the full operation mode.

22. Second communication device as defined in any one of embodiments 20 to 21,
further comprising two antennas, each antenna comprising one or more antenna elements, wherein a first antenna is configured to transmit and/or receive with a first linear combination of a first and a second polarization and the second antenna is configured to transmit and/or receive with a second linear combination of a first and second polarization different from the first linear combination.

23. Second communication device as defined in embodiment 21,
wherein the circuitry is configured to

transmit in full operation mode, after completion of the first part of the frame exchange, a bandwidth change request frame or a ready-to-send, RTS, frame,
receive in full operation mode, after transmission of the bandwidth change request frame or a RTS frame, a bandwidth change acknowledge frame or a clear-to-send, CTS, frame, and,
after having received a bandwidth change acknowledge frame or a CTS frame, transmit frames in full operation mode only when the bandwidth change acknowledge frame or the CTS frame has been received in full operation mode and otherwise continue to transmit frames in partial operation mode.

24. Second communication device as defined in any one of embodiments 20 to 23,
wherein the circuitry is configured to

- transmit a switching request frame in the partial operation mode, the switching request frame indicating that the first communication device shall switch into the full operation mode,
- transmit padding data in the partial operation mode before switching of the first communication device into the full operation mode is completed, and
- receive a switching confirmation frame in the full operation mode after the switching into the full operation mode has been completed.

25 Second communication device as defined in embodiment 24,
wherein the circuitry is configured to transmit the padding data as part of the switching request frame.

26. Second communication device as defined in embodiment 24 or 25,
wherein the circuitry is configured to set the length of the padding data such that it covers at least the switching delay plus a short inter frame space.

27. Second communication device as defined in any one of embodiments 20 to 26,
wherein the circuitry is configured to transmit, on the second link, allocation information indicating an allocation period for which the first link is allocated to one or more third communication devices for data communication.

28. Second communication device as defined in any one of embodiments 20 to 27,
wherein the circuitry is configured to receive an explicit signaling that signals the switching delay from the first communication device.

29. Second communication device as defined in any one of embodiments 20 to 28,

wherein the circuitry is configured to receive an implicit signaling that signals the mode of operation of the first communication device by receiving

- a frame in partial operation mode to indicate that the mode of operation is partial operation mode or by
- a frame in full operation mode, wherein the information contained in frame is duplicated or non-duplicated over the RF chains of both links to indicate the mode of operation is full operation mode.

30. First communication method of a first communication device configured to communicate with a second communication device via two links, the first communication method comprising

- switching between a full operation mode and a partial operation mode,

  wherein in the full operation mode a first link of the two links is disabled and a second link of the two links commonly uses RF chains of both links for the communication with the second communication device and wherein in the partial operation mode each link uses its RF chain for the communication with the second communication device; and

- controlling the moment of switching between the full operation mode and the partial operation mode and/or the moment of accessing the second link in the full operation mode under consideration of a switching delay indicating a delay between the initiation of switching between the full operation mode and the partial operation mode and the completion of the switching.

31. Second communication method of a second communication device configured to communicate with a first communication device via two links, the second communication method comprising

- switching between a full operation mode and a partial operation mode,

  wherein in the full operation mode a first link of the two links is disabled or used for a third communication device and a second link of the two links uses at least the same number of RF chains as used in partial operation mode for the communication with the first communication device and wherein in the partial operation mode the first link is disabled or used for a third communication device and the second link uses one or more RF chains for the communication with the first communication device; and

- controlling the transmission of data and/or control information to the first communication device under consideration of a switching delay of the first communication device, the switching delay indicating a delay between the initiation of switching between the full operation mode and the partial operation mode and the completion of the switching.

32. A non-transitory computer-readable recording medium that stores therein a computer program product, which, when executed by a processor, causes the method according to embodiment 30 or 31 to be performed.
33. A computer program comprising program code means for causing a computer to perform the steps of said method according to embodiment 30 or 31 when said computer program is carried out on a computer.

**Claims**

1. First circuitry of a first communication device (100, 200) configured to communicate with a second communication device (300, 400) via at least two links, the first circuitry configured to

   - switch between a full operation mode and a partial operation mode,

     wherein in the full operation mode a first link of the at least two links is not used for the communication of the second communication device with the first communication device and a second link of the at least two links commonly uses bandwidths and/or spatial streams of the at least two links for the communication of the second communication device with the first communication device and wherein in the partial operation mode each link uses at least a subset of the spatial streams and/or bandwidths of the at least two links for the communication with the first communication device; and

- receive a switching request frame (18), the switching request frame indicating that the first communication device shall switch into the full operation mode, the switching request frame (18) including padding data (18b) prolonging the switching request frame to compensate a switching delay of the second communication device.

2. First circuitry as claimed in any one of the preceding claims,
wherein the circuitry is configured to control the moment of switching between the full operation mode and the partial operation mode and/or the moment of accessing the second link in the full operation mode based on the length of the switching delay.

3. First circuitry as claimed in any one of the preceding claims,
wherein the circuitry is configured to delay switching into the full operation mode on the second link until transmission of a frame that is currently ongoing at the end of the switching delay has been completed.

4. First circuitry as claimed in any one of the preceding claims,
wherein the circuitry is configured to transmit and/or receive a first part of a frame exchange, preferably of a data unit, in partial operation mode before a switching time or the completion of switching from the partial operation mode into the full operation mode and to transmit and/or receive a second part of said frame exchange, preferably of the data unit, in full operation mode after the completion of switching from the partial operation mode into the full operation mode, and/or to transmit, before and/or after transmission or receipt of the first part of the frame exchange, allocation information indicating an allocation period for which the second link is allocated to the first and second communication devices for data communication.

5. First circuitry as claimed in any one of the preceding claims,

wherein the circuitry is configured to

- receive the switching request frame in the partial operation mode, the switching request frame indicating that the first communication device shall switch into the full operation mode,
- initiate switching into the full operation mode,
- receive the padding data in the partial operation mode before switching into the full operation mode is completed, and
- transmit a switching confirmation frame in the full operation mode after the switching into the full operation mode has been completed,

and/or
wherein the circuitry is configured to

switch the second link to full operation mode after receipt of allocation period information on the first link, the allocation period information indicating that the first link is allocated to a third communication device for data communication, and
switch the first link to partial operation mode an advance period before the end of the allocation period, the advance period corresponding to the switching delay or a longer time period.

6. First circuitry as claimed in any one of the preceding claims,
wherein the circuitry is configured to switch, after data reception on the second link is completed, into the partial operation mode on the second link and to transmit acknowledgement information acknowledging receipt of the data on the second link in the partial operation mode, wherein the acknowledgement information is preferably transmitted with a lower code rate and/or a more robust modulation than the data rate and modulation used for reception of the data.

7. First circuitry as claimed in any one of the preceding claims,

wherein the circuitry is configured to listen, after switching from full operation mode into partial operation mode, for allocation information transmitted by a third communication device, on the link that has been disabled while the first communication device has been in the previous full operation mode, before accessing said link for data transmission, the allocation information indicating an allocation period for which said link is allocated to a third communication device for data communication, and/or to listen on the second link to allocation information indicating an allocation period for which the first link is allocated to a third communication device for data communication,
wherein the allocation period is preferably longer than the switching delay or a predetermined time period.

8. First circuitry as claimed in any one of the preceding claims,
wherein the circuitry is configured to explicitly signal the switching delay to the second communication device and/or to receive confirmation from the second communication device to apply the full operation mode or to implicitly signal its mode of operation to the second communication device after reception of the switching request frame by transmitting

   - a frame in partial operation mode if the operation mode is partial operation mode or
   - a frame in full operation mode, wherein the information contained in the frame is duplicated or non-duplicated over the bandwidths and spatial streams of both links if the operation mode is full operation mode.

9. Second circuitry of a second communication device (300, 400) configured to communicate with a first communication device (100, 200) via at least two links, the second circuitry configured to

   - switch between a full operation mode and a partial operation mode,

      wherein in the full operation mode a first link of the at least two links is not used for the communication of the first communication device with the second communication device and a second link of the at least two links commonly uses bandwidths and/or spatial streams of the at least two links for the communication of the first communication device with the second communication device and
      wherein in the partial operation mode each link uses a respective subset of the spatial streams and/or bandwidths of the at least two links for the communication with the second communication device; and

   - control the moment of switching between the full operation mode and the partial operation mode and/or the moment of accessing the second link in the full operation mode based on padding data (18b) prolonging a switching request frame (18) sent to the second communication device to compensate a switching delay.

10. Second circuitry as claimed in claim 9,
wherein the circuitry is configured to

   transmit in full operation mode, after completion of the first part of the frame exchange, a bandwidth change request frame or a ready-to-send, RTS, frame,
   receive in full operation mode, after transmission of the bandwidth change request frame or a RTS frame, a bandwidth change acknowledge frame or a clear-to-send, CTS, frame, and,
   after having received a bandwidth change acknowledge frame or a CTS frame, transmit frames in full operation mode only when the bandwidth change acknowledge frame or the CTS frame has been received in full operation mode and otherwise continue to transmit frames in partial operation mode.

11. Second circuitry as claimed in claim 9 or 10,
wherein the circuitry is configured to

   - transmit the switching request frame in the partial operation mode, the switching request frame indicating that the first communication device shall switch into the full operation mode,
   - transmit the padding data in the partial operation mode before switching of the first communication device into the full operation mode is completed, and
   - receive a switching confirmation frame in the full operation mode after the switching into the full operation mode has been completed.

12. Second circuitry as claimed in claim 11,
wherein the circuitry is configured to transmit the padding data as part of the switching request frame and/or to set the length of the padding data such that it covers at least the switching delay plus a short inter frame space.

13. First communication method of a first communication device configured to communicate with a second communication device via at least two links, the first communication method comprising

   - switching between a full operation mode and a partial operation mode,

wherein in the full operation mode a first link of the at least two links is not used for the communication of the second communication device with the first communication device and a second link of the at least two links commonly uses bandwidths and/or spatial streams of the at least two links for the communication of the second communication device with the first communication device and

wherein in the partial operation mode each link uses at least a subset of the spatial streams and/or bandwidths of the at least two links for the communication with the first communication device; and

- receiving a switching request frame (18), the switching request frame indicating that the first communication device shall switch into the full operation mode, the switching request frame (18) including padding data (18b) prolonging the switching request frame to compensate a switching delay of the second communication device.

14. Second communication method of a second communication device (300, 400) configured to communicate with a first communication device (100, 200) via at least two links, the second communication method comprising

- switching between a full operation mode and a partial operation mode,

wherein in the full operation mode a first link of the at least two links is not used for the communication of the first communication device with the second communication device and a second link of the at least two links commonly uses bandwidths and/or spatial streams of the at least two links for the communication of the first communication device with the second communication device and

wherein in the partial operation mode each link uses a respective subset of the spatial streams and/or bandwidths of the at least two links for the communication with the second communication device; and

- controlling the moment of switching between the full operation mode and the partial operation mode and/or the moment of accessing the second link in the full operation mode based on padding data (18b) prolonging a switching request frame (18) sent to the second communication device to compensate a switching delay.

15. A computer program comprising program code means for causing a computer to perform the steps of said method according to claim 13 or 14 when said computer program is carried out on a computer.

100

130 digital baseband

115 ADC
114 Low-pass
113 PLL $f_A$
112
111 Band-pass
110
bandwidth $BW_A$

125 ADC
124 Low-pass
123 PLL $f_B$
122
121 Band-pass
120
bandwidth $BW_B$

**Fig. 1**

**Fig. 2**

Full operation mode: $f_A = f_B$
Partial operation mode: $f_A \neq f_B$

## Fig. 3

EP 4 550 929 A2

**Fig. 4**

**Fig. 5**

EP 4 550 929 A2

Fig. 6

Fig. 7

Fig. 8

**Fig. 9**

Fig. 10

Fig. 11

**Fig. 12**

EP 4 550 929 A2

Fig. 13

Fig. 14

Fig. 15

**Fig. 16**

non-AP MLD — Single radio
Link 1 — Radio A
Link 2 — Radio B
Data
Link busy — 26

AP MLD — Concurrent radios
Radio 1 — Link busy
Radio 2 — Data — 12, ACK — 13

Operation Radio A: off / partial / full
Operation Radio B: full / partial / off
20, 20'

Fig. 17

Fig. 18A

Fig. 18B

Fig. 18C

EP 4 550 929 A2

Fig. 19

EP 4 550 929 A2